# EUROPEAN PATENT APPLICATION

(11) **EP 4 349 513 A1**
(43) Date of publication of application: **10.04.2024**
(21) Application number: 23192841.7
(22) Date of filing: 23.08.2023
(51) Int. Cl.: B23B 29/04, B23B 31/107, B23B 31/00

(54) **HEAD REPLACEABLE CUTTING TOOL AND FASTENING PROJECTION PORTION THEREOF**

(30) Priority: 04.10.2022 JP 2022160283
(71) Applicant: Tungaloy Corporation, Iwaki-shi Fukushima 970-1144 (JP); ISCAR LTD., 24959 Tefen (IL)
(72) Inventor: KONDOU, Yuma, Iwaki-shi, Fukushima 9701144 (JP); CHISTYAKOV, Sergey, Nahariya, 22247 (IL); MAKHLIN, Dima, Neve Ziv, 2512300 (IL)
(74) Representative: Vossius & Partner Patentanwälte Rechtsanwälte mbB

(57) **Abstract**

A head replaceable cutting tool having a structure that can limit a machining cost when a clearance portion is formed in a portion at which a head is attached and detached, and also limit deformation of a shank is provided. The head replaceable cutting tool includes: a projection portion or a hole portion for attachment and detachment disposed in a head; a shank to which the head is attachable; a hole portion, to which the projection portion is removably attachable along a central axis, or a projection portion disposed in an end portion of the shank; a fastening member that presses the projection portion toward an inner circumference surface of the hole portion; and a fastened portion disposed in the shank to fasten the fastening member. The hole portion has a transverse cross-sectional shape that is a substantially circular shape having a curvature radius R1, and the projection portion has a transverse cross-sectional shape including a contact portion at which an outer circumference surface of the projection portion is in contact with the inner circumference surface of the hole portion and a clearance portion that is formed in a part of the outer circumference surface so as to deviate radially inward from a virtual circle corresponding to the inner circumference surface and does not come into contact with the inner circumference surface.

## Description

### Background

### Field

The present invention relates to a head replaceable cutting tool and a fastening projection portion thereof.

### Description of Related Art

A head replaceable cutting tool has been used that has a head attachable to and detachable from a shank. For example, with an automatic lathe, it may be difficult or impossible to change an insert inside the lathe machine. The use of such a head replaceable cutting tool allows the head to be replaced without removing the shank from a tool post or the like of the lathe. This is convenient for turning work. Conventionally, for such a head replaceable cutting tool, a structure is proposed in which a portion where the projection portion for head attachment/detachment is in contact with the hole portion of the shank, to which the projection portion is attached, includes a clearance portion for separating a part of the contact portion. As such a structure, Patent Publication JP S57-178604A and Patent Publication JP S59-59303A, for example, describe a tool and mechanism having a structure in which the hole portion is shaped in a non-circular shape so that a gap that functions as a clearance portion is formed when a projection portion having a circular cross section is attached. Also, a configuration in which a clearance portion is provided in an attachment/detachment mechanism of a lathe boring bar (internal turning tool) (see U.S. Patent Application Publication No. 2006/0048615), and a configuration in which a clearance portion is provided in an attachment/detachment mechanism of a shank to be clamped to a tool holder (for a milling tool or a hole machining tool) (see Japanese Translation of PCT Application No. 2007-502719 and Patent Publication JP S55-70512A) are disclosed, although they are not head replaceable tools.

### Summary

However, configuring a hole portion to be non-circular as described above cannot be achieved by a single step of drilling and may require machining of multiple steps using an end mill. In some cases, tools need to be exchanged during the process, for example, increasing the steps and work time. This may increase the machining cost accordingly.

Furthermore, when a gap (clearance portion) is provided in the clamping surface of the shank as in Patent Publication JP S57-178604A, the thickness of the shank is reduced. This may cause deformation of the shank due to external pressure during clamping, making it impossible to attach or detach the head. In this case, the advantage of the head replaceable cutting tool of allowing only the head to be replaced while the shank is attached to the tool post of the lathe may be lost.

In view of the above, it is an object of the present invention to provide: a head replaceable cutting tool having a structure that can limit a machining cost when a clearance portion is formed in a portion at which a head is attached and detached, and also limit deformation of the shank; and a fastening projection portion thereof.

One aspect of the present invention relates to a head replaceable cutting tool having a replaceable head, the head replaceable cutting tool including:
a projection portion or a hole portion for attachment and detachment disposed in the head;
a shank to which the head is attachable;
a hole portion, to which the projection portion is removably attachable along a central axis, or a projection portion disposed in an end portion of the shank;
a fastening member that presses the projection portion toward an inner circumference surface of the hole portion; and
a fastened portion disposed in the shank to fasten the fastening member, wherein
the hole portion has a transverse cross-sectional shape that is a substantially circular shape having a curvature radius R1, and
the projection portion has a transverse cross-sectional shape including a contact portion at which an outer circumference surface of the projection portion is in contact with the inner circumference surface of the hole portion and a clearance portion that is formed in a part of the outer circumference surface so as to deviate radially inward from a virtual circle corresponding to the inner circumference surface and does not come into contact with the inner circumference surface.

With the head replaceable cutting tool of the above aspect, the clearance portion is disposed in the outer circumference surface of the projection portion instead of the hole portion. Thus, there are no inhibitions against forming the hole portion in a circular shape. In this case, the hole portion can be formed into a circular shape by a single step of drilling. This reduces the steps and work time as compared with a configuration in which the hole portion is machined into a non-circular shape, thereby limiting the machining cost accordingly. Moreover, when the clearance portion is disposed in the projection portion in this manner, it is easier to secure the material thickness around the hole portion as compared with a configuration in which the hole portion is machined to have a clearance. This limits deformation of the hole portion and thus limits deformation of the shank.

In the head replaceable cutting tool described above, the shape of the clearance portion formed between the virtual circle and the outer circumference surface of the projection portion as viewed along the central axis may be defined by two curves or lines that approximate the curves.

In the head replaceable cutting tool described above, the clearance portion may have a shape defined by two arcs with different curvatures.

In the head replaceable cutting tool described above, the projection portion may have a transverse cross-sectional shape including a portion having a curvature radius R2 that is greater than the curvature radius R1 of the hole portion, and a first clearance portion may be formed in this portion.

In the head replaceable cutting tool described above, the first clearance portion may be formed on an opposite side in the projection portion to an abutment portion against which the fastening member abuts.

In the head replaceable cutting tool described above, a plurality of the clearance portions may be formed in the projection portion.

In the head replaceable cutting tool described above, the projection portion may have a transverse cross-sectional shape including a portion having a curvature radius R3 that is greater than the curvature radius R1 of the hole portion, and a second clearance portion may be formed in this portion.

In the head replaceable cutting tool described above, a pair of the second clearance portions may be formed.

In the head replaceable cutting tool described above, the pair of second clearance portions may be formed at positions across the central axis.

In the head replaceable cutting tool described above, the pair of second clearance portions may be formed symmetrically with respect to a line connecting the center of the abutment portion and the central axis.

In the head replaceable cutting tool described above, the magnitudes of R2 and R3 of the portion having the curvature radius R2 and the portion having the curvature radius R3 of the projection portion may satisfy R1 < R3 < R2 with respect to the curvature radius R1 of the hole portion.

In the head replaceable cutting tool described above, the magnitudes of R2 and R3 of the portion having the curvature radius R2 and the portion having the curvature radius R3 of the projection portion may satisfy R1 < R2 < R3 with respect to the curvature radius R1 of the hole portion.

In the head replaceable cutting tool described above, the magnitudes of R2 and R3 of the portion having the curvature radius R2 and the portion having the curvature radius R3 of the projection portion may satisfy R1 < R2 = R3 with respect to the curvature radius R1 of the hole portion.

In the head replaceable cutting tool described above, the curvature radius R1 of the hole portion may be set to a value in a range that allows a necessary and sufficient material thickness to be secured around the hole portion according to the size of the shank.

Another aspect of the present invention relates to a fastening projection portion of a head replaceable cutting tool including a head and a shank to which the head is attachable, wherein a projection portion is disposed in one of the head and the shank so as to be removably attachable to a hole portion disposed in the other of the head and the shank along a central axis, and
the projection portion has a transverse cross-sectional shape including
a plurality of arc-shaped clearance portion forming surfaces that deviate radially inward from a virtual circle to form clearance portions in parts of an outer circumference surface of the projection portion, and
a contact portion forming region located on the virtual circle between the clearance portion forming surfaces.

### Brief Description of Drawings

FIG. 1 is an exploded perspective view of a head and a shank that constitute a head replaceable cutting tool according to an embodiment of the present invention;
FIG. 2 is a diagram of the shank as viewed from the left side;
FIG. 3 is a top view of the shank;
FIG. 4 is an enlarged view showing the area around a fastened portion of the shank shown in FIG. 2;
FIG. 5 is a cross-sectional view of the shank taken along line V-V in FIG. 4;
FIG. 6 is a diagram of the head as viewed from the left side;
FIG. 7 is a diagram showing a cross-sectional shape of a head attachment/detachment projection portion taken along line VII-VII in FIG. 6;
FIG. 8 is a diagram illustrating a cross-sectional shape of the attachment/detachment projection portion with further clarity;
FIG. 9 is a diagram illustrating how a cutting force acts during cutting off and grooving;
FIG. 10 is a diagram illustrating the direction in which an external force caused by a cutting force acts on the projection portion of the head during cutting off and grooving;
FIG. 11 is a diagram illustrating a cross-sectional shape of the projection portion in a configuration in which the curvature radius R1 of the hole portion < the curvature radius R3 of a second clearance portion < the curvature radius R2 of a first clearance portion;
FIG. 12 is a diagram illustrating how a cutting force acts during external turning;
FIG. 13 is a diagram illustrating the direction in which an external force caused by a cutting force acts on the projection portion of the head during external turning;
FIG. 14 is a diagram illustrating a cross-sectional shape of the projection portion in a configuration in which the curvature radius R1 of the hole portion < the curvature radius R2 of the first clearance portion < the curvature radius R3 of the second clearance portion;
FIG. 15 is a perspective view showing how a fastening screw is threaded into the shank to which a head is attached to fix the head;
FIG. 16 is a perspective view showing a state in which the shank is attached to a tool post of an automatic lathe; and
FIG. 17 is a perspective view showing how the fastening screw is removed with the shank attached to the tool post of the automatic lathe.

### Detailed Description

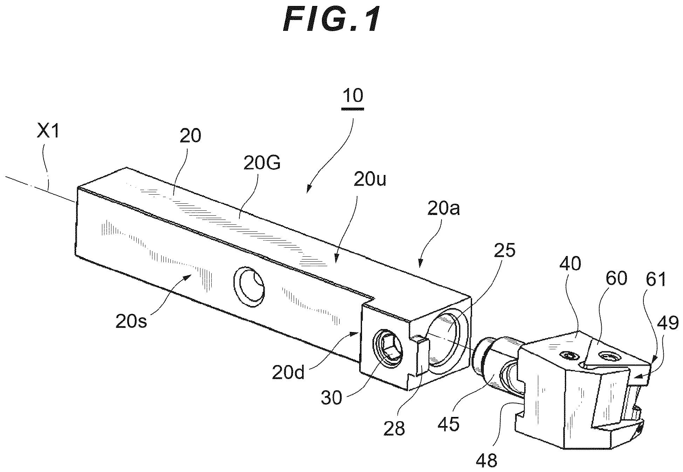

Referring to the drawing, a preferred embodiment of a head replaceable cutting tool according to the present invention is now described in detail (see FIG. 1, for example).

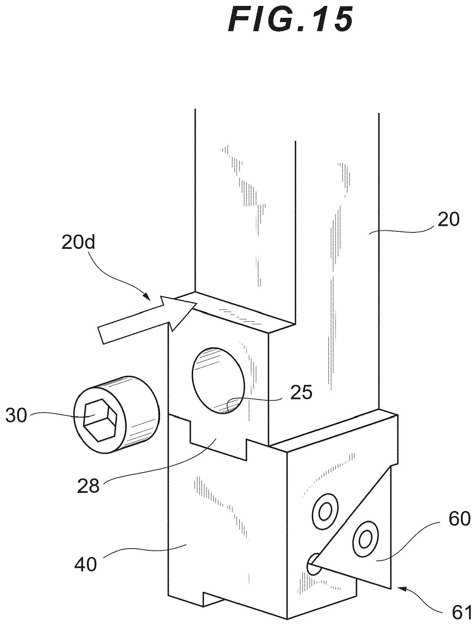

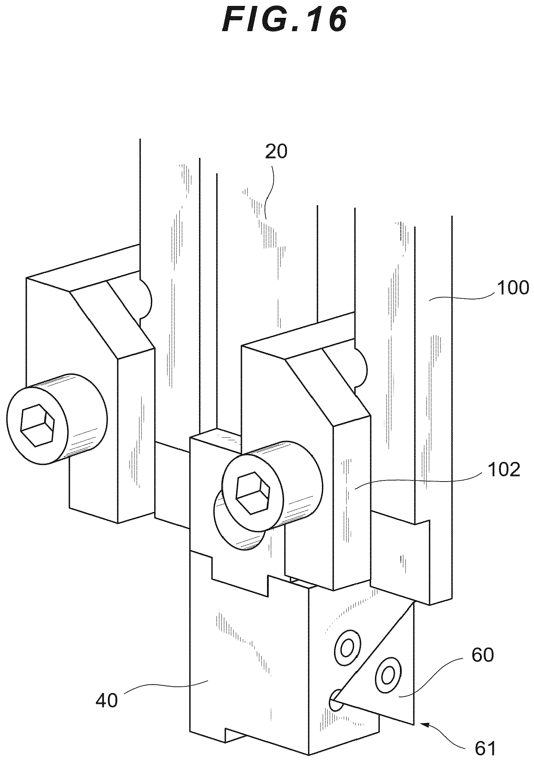

A head replaceable cutting tool 10 is configured as a tool that cuts into a work (not shown) by feeding a cutting edge 61 of a cutting insert 60 during machining with an automatic lathe (not shown) or the like. Also, multiple types of head replaceable cutting tools 10 may be arranged on a tool post 100 in a "gang type" manner, and desired machining may be performed by moving the tool post 100 in the X-axis direction (for example, along a central axis X1 of a shank 20), the Z-axis direction perpendicular to the X-axis direction, and the Y-axis direction perpendicular to both the X-axis direction and the Z-axis direction and by appropriately selecting, moving, and replacing the cutting insert 60 according to the mode of turning (see FIGS. 15 to 17).

The head replaceable cutting tool 10 of the present embodiment used for such turning is a head replaceable cutting tool in which a head 40 is removably attachable to the shank 20. The head replaceable cutting tool 10 includes the shank 20, the head 40, and a fastening screw (fastening member) 30, which fixes the head 40 to the shank 20 (see FIGS. 1 to 7, for example).

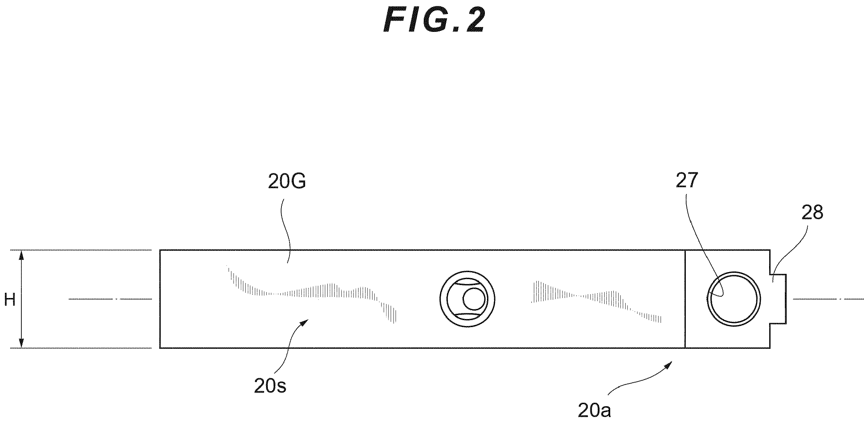

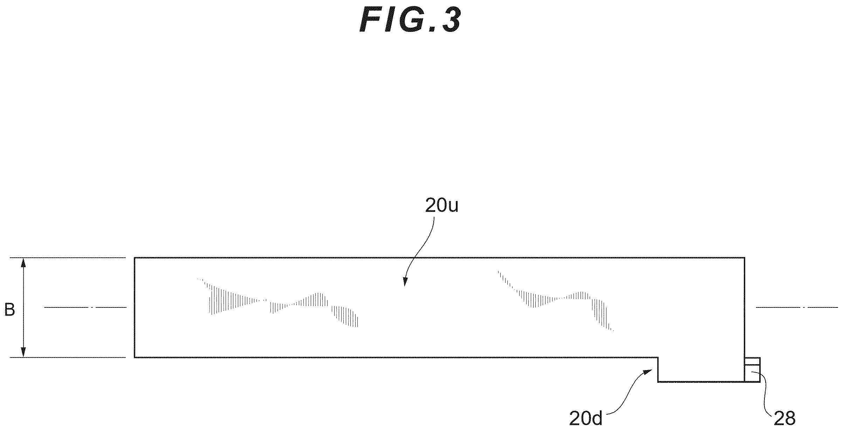

The shank 20 is formed so as to be attached to the tool post 100 with its gripped portion (the body portion having a constant cross section as for the shank 20 of the present embodiment) 20G gripped (see FIGS. 1 to 3, for example). The shank 20 of the present embodiment is shaped to extend in the longitudinal direction (the direction coinciding with the above-mentioned X-axis direction) along the central axis X1 (see FIG. 1, for example) passing through the center of the gripped portion 20G of the shank 20, and substantially has the shape of a rectangular solid with a rectangular transverse cross-sectional shape perpendicular to the central axis X1 (see FIGS. 1 to 3, for example). The width of the gripped portion 20G (referred to as "shank thickness" in this embodiment) as viewed on a side surface 20s of the shank 20 (in this embodiment, the side surface of the shank 20 on which a fastened portion 27 is visible) is H (see FIG. 2), and the width of the gripped portion 20G as viewed on the upper surface 20u of the shank 20 (referred to as "shank width" in this embodiment) is B (see FIG. 3).

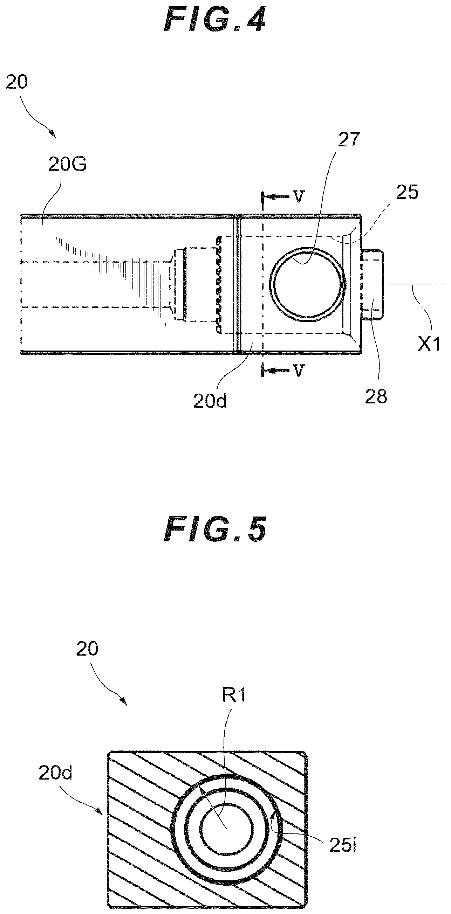

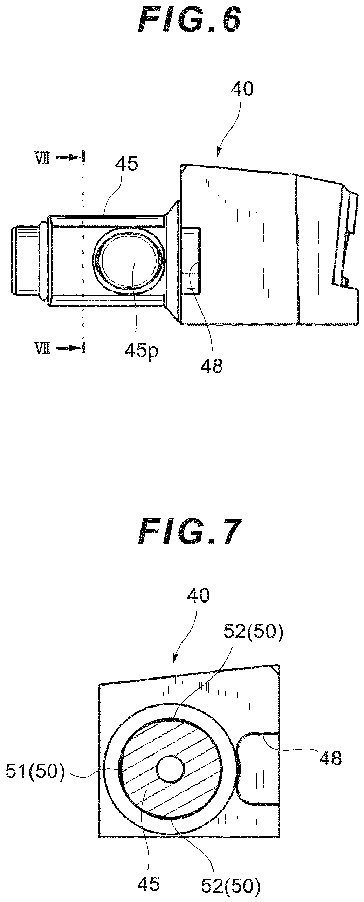

A leading end portion (the side at which the head 40 is attached and detached) 20a of the shank 20 includes an attachment/detachment hole portion 25 and a fastened portion 27 (see FIGS. 1 and 5, for example). The attachment/detachment hole portion 25 is configured as a hole for mounting the head 40, and an attachment/detachment projection portion 45 of the head 40 can be fitted into the attachment/detachment hole portion 25. The fastened portion 27 is formed by a screw hole or the like into which the fastening screw 30 is threaded. When the fastening screw 30 is fastened to the fastened portion 27, the end of the fastening screw 30 presses the attachment/detachment projection portion 45 toward the inner circumference surface 25i of the attachment/detachment hole portion 25, thereby fixing the head 40. In the head replaceable cutting tool 10 of the present embodiment, the fastened portion 27 is provided in a stepped portion 20d, which is formed at the leading end portion 20a of the shank 20 and protrudes to the side corresponding to the side surface 20s (see FIGS. 1 and 2, for example). The stepped portion 20d includes a protrusion 28, which is to be fitted into a recessed part 48 of the head 40 attached to the leading end portion 20a so as to uniquely define the orientation of the head 40 (FIGS. 3 and 6, for example).

The fastening screw 30 is a member that fixes the head 40 by pressing the attachment/detachment projection portion 45 of the head 40 toward the inner circumference surface 25i of the attachment/detachment hole portion 25 of the shank 20 (see FIG. 1, for example). The present embodiment uses a screw as this fastening member. However, the head 40 may be fixed using a member other than a screw, such as a lever, a spring, a wedge, or a combination thereof.

The head 40 is removably attachable to the shank 20 and includes the attachment/detachment projection portion 45 and an insert mounting seat 49. A cutting insert 60 is attached to the insert mounting seat 49 (see FIG. 1, for example). The attachment/detachment projection portion 45 is shaped to have an outer circumference surface 45o of a predetermined cross-sectional shape, and is configured to be attachable to and detachable from the attachment/detachment hole portion 25 of the shank 20 along the central axis X1. The side portion of the attachment/detachment projection portion 45 includes an abutment portion 45p having a predetermined shape (for example, an elongated hole shape or an elliptical shape). The leading end of the fastening screw 30 abuts against the abutment portion 45p (see FIGS. 1 and 6, for example).

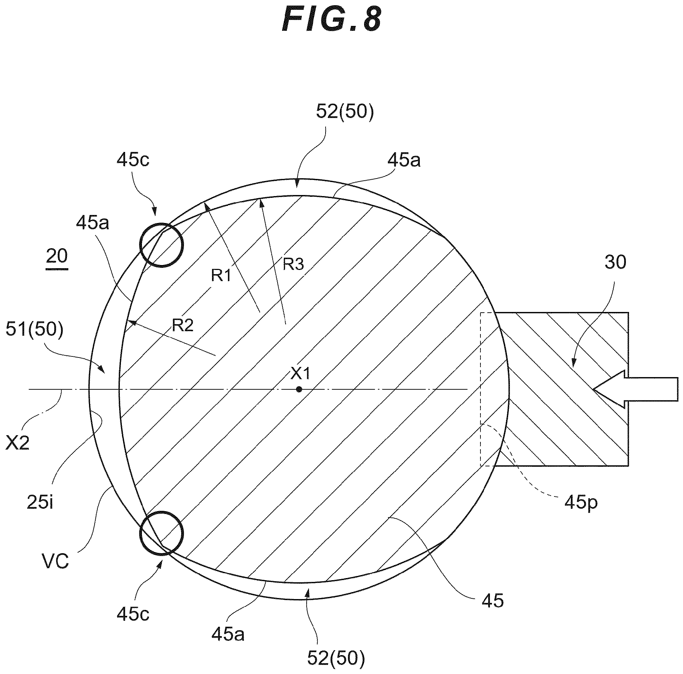

The above-mentioned shape of the attachment/detachment hole portion 25 of the shank 20 and the cross-sectional shape of the attachment/detachment projection portion 45 of the head 40 are now described. First, as for the attachment/detachment hole portion 25 of the shank 20, its transverse cross-sectional shape (the shape of a cross section perpendicular to the central axis X1 for the head replaceable cutting tool 10 of the present embodiment) is a substantially circular shape having a curvature radius R1 (see FIG. 5, for example). The term "substantially circular shape" as used herein is intended to encompass not only a perfect circle as a basic shape, but also a shape that is not strictly a perfect circle due to the influence of machining errors or the like. As for the attachment/detachment projection portion 45 of the head 40, its transverse cross-sectional shape includes a plurality of arc-shaped clearance portion forming surface 50a, which deviate radially inward from a virtual circle (in this embodiment, the virtual circle is the circle along the cross-sectional shape of the inner circumference surface 25i of the attachment/detachment hole portion 25) VC to form clearance portions 50 in parts of the outer circumference surface 45o of the attachment/detachment projection portion 45, and contact portions (may also be referred to as "contact portion forming regions" herein) 45c, which are located on the virtual circle VC between the plurality of clearance portion forming surfaces 50a (see FIG. 8). As a result, the attachment/detachment projection portion 45 of the present embodiment has a transverse cross-sectional shape including, in parts of the outer circumference surface 45o, the contact portions 45c (indicated and surrounded by circles in the figure), which come into contact with the inner circumference surface 25i of the attachment/detachment hole portion 25, and the clearance portions 50, which are formed in parts of the outer circumference surface 45o (see FIG. 7, for example). In this manner, when the clearance portions to be formed between the attachment/detachment hole portion 25 and the attachment/detachment projection portion 45 are disposed in the outer circumference surface 45o of the attachment/detachment projection portion 45 instead of the attachment/detachment hole portion 25, there are no inhibitions against forming the attachment/detachment hole portion 25 in a substantially circular shape (including a perfect circle). This allows the attachment/detachment hole portion 25 to be finished in a circular shape by a single step of drilling. This reduces the machining steps and work time as compared with a configuration in which the hole portion is machined into a non-circular shape, thereby limiting the machining cost accordingly. Also, when the hole portion is machined to have clearances, the strength of the shank needs to be taken into consideration, such as by securing a suitable material thickness around the hole portion. In contrast, when the attachment/detachment hole portion 25 is formed in a substantially circular shape (including a perfect circle) as in the present embodiment, unevenness in the strength is likely to be limited, and it is not necessary to secure a material thickness greater than required around the hole portion. This limits deformation of the shank 20 while achieving the reduction in size and weight of the shank 20. In other words, in the head replaceable cutting tool 10 of the present embodiment, the attachment/detachment hole portion 25 can be enlarged to the maximum hole diameter that does not cause the problem of deformation of the shank 20. This allows the outer diameter of the attachment/detachment projection portion 45 of the head 40 to be enlarged accordingly, thereby increasing the stability (clamping rigidity) in fixing the head.

Various aspects are conceivable for the clearance portions 50 formed in parts of the outer circumference surface 45o of the attachment/detachment projection portion 45 of the head 40. As an example, as viewed along the central axis X1, a clearance portion 50 may have a shape defined by two curves or lines that approximate the curves, for example by two arcs with different curvatures, in other words, a crescent shape (see FIG. 8, for example). A clearance portion 50 of such a shape can be formed by cutting a part of the outer circumference surface 45o of the attachment/detachment projection portion 45 into an arc having a curvature radius (for example, R2 or R3) that is greater than the curvature radius R1 of the attachment/detachment hole portion 25. Thus, such a shape, combined with the fact that the outer circumference surface 45o of the attachment/detachment projection portion 45, instead of the hole, is machined, allows the trouble and time required for the machining to be reduced. Of course, two arcs with different curvatures are merely an example of two curves, and there is no particular limitation as long as they are curves that can be achieved by machining, such as elliptical curves and parabolic curves. Also, as long as the shape can be achieved by machining as described above, the shape of parts of the outer circumference surface 45o of the attachment/detachment projection portion 45 (the shape of the clearance portion forming surfaces 45a) forming the clearance portions 50 may include lines that approximate curves. Examples of a line that approximates a curve include a line that is substantially a curve as a whole but partially replaced by minute straight lines or polygonal lines, a line formed by a curve that includes parts that approximate straight lines, and a curved line that includes parts of polygonal lines formed by a number of short straight lines.

The above-described clearance portions 50 of the head replaceable cutting tool 10 of the present embodiment include, in the outer circumference surface 45o of the attachment/detachment projection portion 45, a first clearance portion 51 and second clearance portions 52, which differ mutually in shape or size (see FIG. 8).

The first clearance portion 51 is formed between the outer circumference surface 45o of the attachment/detachment projection portion 45 and the inner circumference surface 25i of the attachment/detachment hole portion 25 by machining a part of the outer circumference surface 45o of the attachment/detachment projection portion 45 into a transverse cross-sectional shape including an arc-shaped portion having a curvature radius R2 that is greater than the curvature radius R1 of the attachment/detachment hole portion 25 (see FIG. 8). In this embodiment, the first clearance portion (the portion having the curvature radius R2) 51 is located at a position (the 9 o'clock position in FIG. 8) on the opposite side of the central axis X1 from the position (the 3 o'clock position in FIG. 8) at which the fastening screw 30 (or the abutment portion 45p against which the leading end of the fastening screw 30 abuts) is located (see FIG. 8).

A second clearance portion 52 is formed between the outer circumference surface 45o of the attachment/detachment projection portion 45 and the inner circumference surface 25i of the attachment/detachment hole portion 25 by machining a part of the outer circumference surface 45o of the attachment/detachment projection portion 45 into a transverse cross-sectional shape including an arc-shaped portion having a curvature radius R3 that is greater than the curvature radius R1 of the attachment/detachment hole portion 25 (see FIG. 8). In the present embodiment, a pair of second clearance portions (portions having the curvature radius R3) 52 are formed at positions on opposite sides of the central axis X1. The pair of second clearance portions 52 are formed at the 12 o'clock position and the 6 o'clock position in FIG. 8 so as to be symmetrical with respect to a center line X2 connecting the center of the position at which the fastening screw 30 (or the abutment portion 45p against which the leading end of the fastening screw 30 abuts) is located (the 3 o'clock position in FIG. 8) and the central axis X1.

The outer circumference surface 45o of the attachment/detachment projection portion 45 partially includes portions that are to be in contact with the inner circumference surface 25i of the attachment/detachment hole portion 25 while being pressed (referred to as "contact portions" herein) 45c. In the head replaceable cutting tool 10 of the present embodiment, a contact portion 45c is formed between the upper second clearance portion 52 (at the 12 o'clock position) and the first clearance portion 51, and another contact portion 45c is formed between the lower second clearance portion 52 (at the 6 o'clock position) and the first clearance portion 51 (see FIG. 8). That is, together with the point of contact with the fastening screw 30, the structure forms a three-point contact clamping mechanism. It should be noted that the formation of such a three-point contact clamping mechanism requires clearances provided in the portions other than the three contact points. Furthermore, even if the attachment/detachment hole portion 25 is deformed due to excessive external pressure during clamping, a sufficient gap can be secured between the attachment/detachment projection portion 45 and the attachment/detachment hole portion 25, thereby maintaining the reliable three-point contact state.

Since these contact portions 45c are inherently formed between the first clearance portion 51 and the second clearance portions 52, their positions (specifically, the positions in the circumferential direction) vary depending on the magnitude relationship between the curvature radius R2 and the curvature radius R3 and the like. In the present embodiment, as will be described below, the magnitude relationship between the curvature radius R2 and the curvature radius R3 and the circumferential positions of the contact portions 45c are appropriately changed according to the type of machining.

### First Aspect

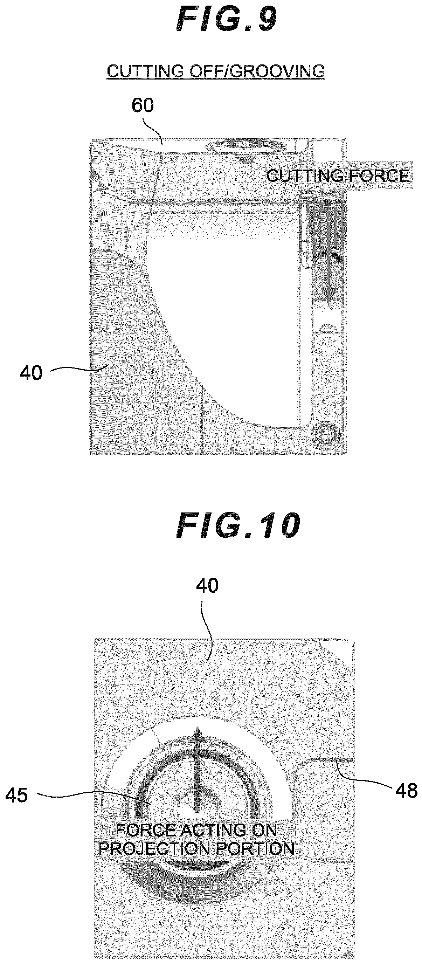

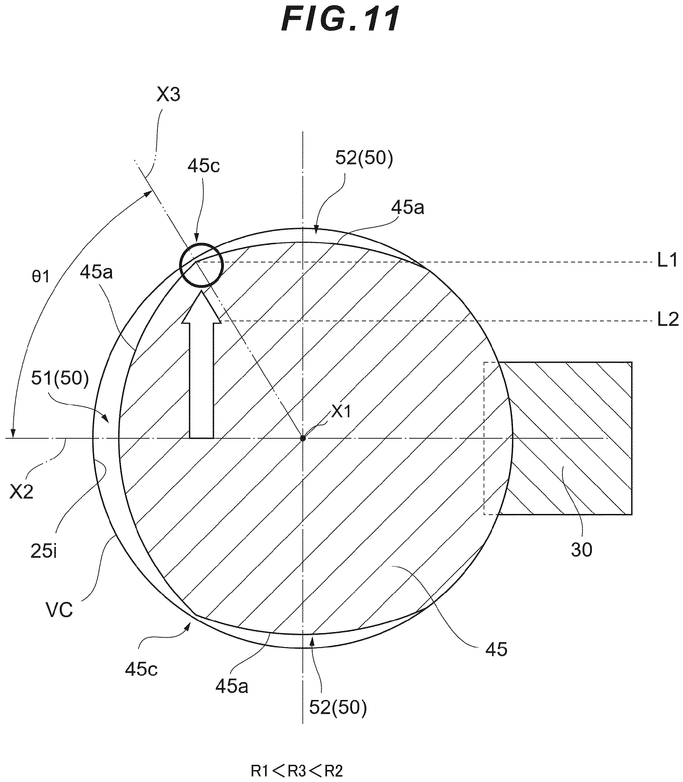

When cutting off or grooving is performed with the head replaceable cutting tool 10, the magnitude of R2 of the first clearance portion (the portion having the curvature radius R2) 51 and the magnitude of R3 of the second clearance portion (the portion having the curvature radius R3) 52 may be set to satisfy R1 < R3 < R2 with respect to the curvature radius R1 of the hole portion (see FIG. 11). When performing cutting off or grooving, a cutting force as shown in FIG. 9 acts on the cutting insert 60. As a result, an external force acts on the attachment/detachment projection portion 45 of the head 40 from the central axis X1 in a direction perpendicular to the center line X2 (as for the example shown in FIG. 10, in the direction of the 12 o'clock position at which a second clearance portion 52 is located). This presses the attachment/detachment projection portion 45 onto the inner circumference surface 25i in this direction. In this regard, satisfying R1 < R3 < R2 as described above allows a contact portion 45c to be closer to the 12 o'clock position (another contact portion 45c to be closer to the 6 o'clock position) (in other words, the angle θ formed by a line X3 connecting the central axis X1 to the contact portion 45c and the center line X2 can be set to a greater value θ1, and the distance L between the center line X2 and the contact portion 45c can be set to a larger value L1). This provides greater resistance against an external force acting in the direction of the second clearance portion 52. In this manner, by placing the contact portion 45c in the moving direction of the attachment/detachment projection portion 45, the attachment/detachment projection portion 45 is less likely to bend (see FIGS. 9 to 11).

### Second Aspect

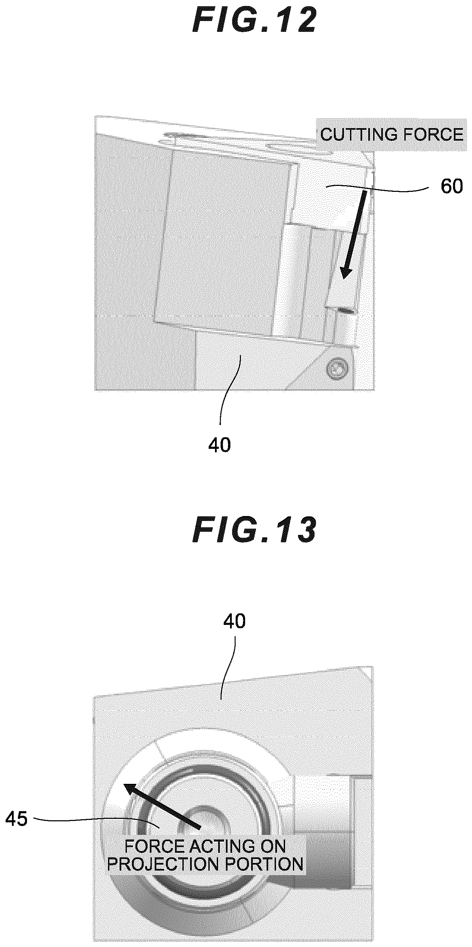

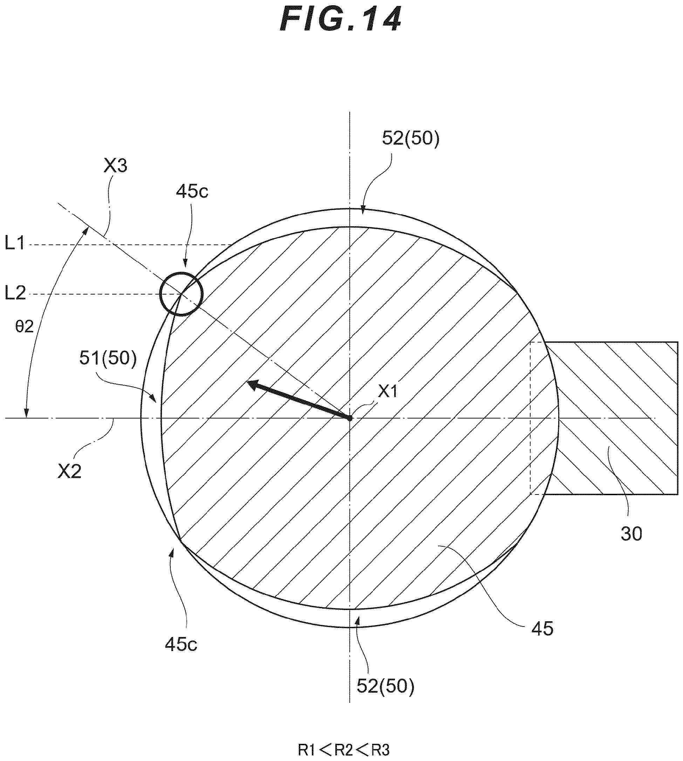

When external turning is performed with the head replaceable cutting tool 10, the magnitude of R2 of the first clearance portion (the portion having the curvature radius R2) 51 and the magnitude of R3 of the second clearance portion (the portion having the curvature radius R3) 52 may be set to satisfy R1 < R2 < R3 with respect to the curvature radius R1 of the hole portion (see FIG. 14). In external turning, a cutting force shown in FIG. 12 acts on the cutting insert 60 in an oblique direction (the reason for the oblique direction is that a feeding force component is created in addition of the main force component of the cutting). As a result, an external force acts on the attachment/detachment projection portion 45 of the head 40 from the central axis X1 toward the upper left as viewed in FIG. 14. This presses the attachment/detachment projection portion 45 onto the inner circumference surface 25i in this direction. In this regard, satisfying R1 < R2 < R3 as described above allows a contact portion 45c to be closer to the 9 o'clock position (in other words, the angle θ formed by the line X3 connecting the central axis X1 to the contact portion 45c and the center line X2 can be set to a smaller value θ2, and the distance L between the center line X2 and the contact portion 45c can be set to a smaller value L2). This provides greater resistance against an external force acting in a direction toward the first clearance portion 51. In this manner, by placing the contact portion 45c in the moving direction of the attachment/detachment projection portion 45, the attachment/detachment projection portion 45 is less likely to bend (see FIGS. 12 to 14).

### Third Aspect

When cutting off, grooving, and also external turning are performed with the head replaceable cutting tool 10, the magnitude of R2 of the first clearance portion (the portion having the curvature radius R2) 51 and the magnitude of R3 of the second clearance portion (the portion having the curvature radius R3) 52 may be set to satisfy R1 < R2 = R3 with respect to the curvature radius R1 of the hole portion. In short, by adopting an intermediate aspect between the first aspect and the second aspect, it is possible to have a general-purpose configuration that takes each machining into consideration.

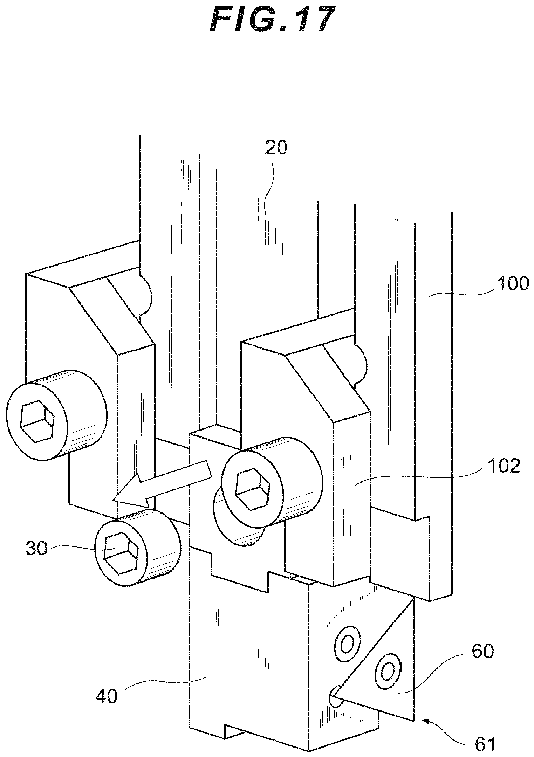

According to the head replaceable cutting tool 10 of the present embodiment, the head 40 suitable for the machining mode as described above can be selected and adopted. Also, the head replaceable cutting tool 10 of the present embodiment allows the head 40 to be replaced with the shank 20 attached to the tool post 100 (see FIG. 17).

The above-described embodiments are preferred examples of the present invention. However, the present invention is not limited to these, and various modifications can be made without departing from the gist of the present invention. For example, the curvature radius R1 of the attachment/detachment hole portion 25 of the head replaceable cutting tool 10 as described above may be set to a value in a range that is suitable to secure a necessary and sufficient material thickness around the hole portion 25 and to limit deformation of the hole portion 25 and its vicinity, according to the size of the shank 20 as illustrated below (see Table 1).

**[Table 1]**

| | | | | | |
|---|---|---|---|---|---|
| H[mm] | 10 | 12 | 16 | 20 | 25 |
| B[mm] | 10 | 12 | 16 | 20 | 25 |
| SHANK SIZE[mm] | 10 SQUARE | 12 SQUARE | 16 SQUARE | 20 SQUARE | 25 SQUARE |
| R1[mm] | 2.5≦R1≦4.0 | 2.7≦R1≦4.3 | 4.0≦R1≦6.8 | 5.5≦R1≦8.5 | 7.0≦R1≦10.5 |

In this embodiment, the head replaceable cutting tool 10 is illustrated in which the attachment/detachment projection portion 45 is disposed in the head 40 and the attachment/detachment hole portion 25 is disposed in the shank 20, and the shapes and structures to fasten these are described. However, this is merely a preferred application example. Although not shown in detail, it is obvious from the principles of the present invention that the present invention is applicable to a fastening structure in which a hole portion is disposed in the head 40 and an attachment/detachment projection portion is disposed in the shank 20.

The present invention is suitably applied mainly to a cutting tool for turning, in particular to a head replaceable cutting tool for an automatic lathe.

## Claims

1. A head replaceable cutting tool having a replaceable head, the head replaceable cutting tool comprising:
a projection portion or a hole portion for attachment and detachment disposed in the head;
a shank to which the head is attachable;
a hole portion, to which the projection portion is removably attachable along a central axis, or a projection portion disposed in an end portion of the shank;
a fastening member that presses the projection portion toward an inner circumference surface of the hole portion; and
a fastened portion disposed in the shank to fasten the fastening member, wherein
the hole portion has a transverse cross-sectional shape that is a substantially circular shape having a curvature radius R1, and
the projection portion has a transverse cross-sectional shape including a contact portion at which an outer circumference surface of the projection portion is in contact with the inner circumference surface of the hole portion and a clearance portion that is formed in a part of the outer circumference surface so as to deviate radially inward from a virtual circle corresponding to the inner circumference surface and does not come into contact with the inner circumference surface.

2. The head replaceable cutting tool according to claim 1, wherein a shape of the clearance portion formed between the virtual circle and the outer circumference surface of the projection portion as viewed along the central axis is defined by two curves or lines that approximate the curves.

3. The head replaceable cutting tool according to claim 1 or 2, wherein the clearance portion has a shape defined by two arcs with different curvatures.

4. The head replaceable cutting tool according to any one of claims 1 to 3, wherein the projection portion has a transverse cross-sectional shape including a portion having a curvature radius R2 that is greater than the curvature radius R1 of the hole portion, and a first clearance portion is formed in this portion.

5. The head replaceable cutting tool according to claim 4, wherein the first clearance portion is formed on an opposite side in the projection portion to an abutment portion against which the fastening member abuts.

6. The head replaceable cutting tool according to claim 4 or 5, wherein a plurality of the clearance portions are formed in the projection portion.

7. The head replaceable cutting tool according to any one of claims 1 to 6, wherein the projection portion has a transverse cross-sectional shape including a portion having a curvature radius R3 that is greater than the curvature radius R1 of the hole portion, and a second clearance portion is formed in this portion.

8. The head replaceable cutting tool according to claim 7, wherein a pair of the second clearance portions are formed.

9. The head replaceable cutting tool according to claim 8, wherein the pair of second clearance portions are formed at positions across the central axis.

10. The head replaceable cutting tool according to claim 8 or 9, wherein the pair of second clearance portions are formed symmetrically with respect to a line connecting a center of the abutment portion and the central axis.

11. The head replaceable cutting tool according to any one of claims 7 to 10, wherein magnitudes of R2 and R3 of the portion having the curvature radius R2 and the portion having the curvature radius R3 of the projection portion satisfy R1 < R3 < R2 with respect to the curvature radius R1 of the hole portion.

12. The head replaceable cutting tool according to claim 10 or 11, wherein magnitudes of R2 and R3 of the portion having the curvature radius R2 and the portion having the curvature radius R3 of the projection portion satisfy R1 < R2 < R3 with respect to the curvature radius R1 of the hole portion.

13. The head replaceable cutting tool according to claim 10, 11, or 12.
wherein magnitudes of R2 and R3 of the portion having the curvature radius R2 and the portion having the curvature radius R3 of the projection portion satisfy R1 < R2 = R3 with respect to the curvature radius R1 of the hole portion.

14. The head replaceable cutting tool according to any one of claims 1 to 13, wherein the curvature radius R1 of the hole portion is set to a value in a range that allows a necessary and sufficient material thickness to be secured around the hole portion according to a size of the shank.

15. A fastening projection portion of a head replaceable cutting tool, preferably according to any one of the preceding claims, the head replaceable cutting tool including a head and a shank to which the head is attachable, wherein a projection portion is disposed in one of the head and the shank so as to be removably attachable to a hole portion disposed in the other of the head and the shank along a central axis, and
the projection portion has a transverse cross-sectional shape including
a plurality of arc-shaped clearance portion forming surfaces that deviate radially inward from a virtual circle to form clearance portions in parts of an outer circumference surface of the projection portion, and
a contact portion forming region located on the virtual circle between the clearance portion forming surfaces.
